# EUROPEAN PATENT APPLICATION

(11) **EP 1 607 536 A1**
(43) Date of publication of application: **21.12.2005**
(21) Application number: 04013959.4
(22) Date of filing: 15.06.2004
(51) Int. Cl.: E03F 7/00, B60R 15/04

(54) **Device for hermetic drainage of a wastewater container**

(71) Applicant: DI.BI.TEC.s.r.l., 00178 Roma (IT)
(72) Inventor: Di Battista, Vittorio, 01033 Civita Castellana (VT) (IT); Traversari, Carmela, 01015 Fontevivola Sutri (VT) (IT)
(74) Representative: Turini, Laura

(57) **Abstract**

This system for the drainage of tanks containing wastewater, connected to toilets or other apparatus, essentially consists of a device equipped with a lid internally closing the tank, which is opened from the outside by the insertion of the nozzle of a collecting bag. When this nozzle is inserted into the hole of the device, it pushes the lid inside and opens the hole. In this way the bag refills with the wastewater while the tank is emptying. The nozzle of said plastic bag is connected to a cylindrical conduit with a thin rounded buffer that pushes the lid of the toilet or tank inside, so opening the device and letting the wastewater flow into the same bag, avoiding any possible break of the lid.

## Description

### Technical Field

The present invention concerns the technical sector relative to the production of toilets equipped with crushing tank and an apparatus for crushing and flushing wastewater, by means of an integrated water pump having double function of crushing the organic waste together with the toilet paper and of flushing the sewage out.

In particular this invention aims at improving, thanks to an innovative mechanism, the system of manual flush, therefore of drainage of the crushing tank holding the water pump, which crushes and simultaneously conveys the sewage.

### Background art

In order to better clarify the specific utility of this invention, it's necessary to shortly describe how the current equipments now work.

Nowadays, the toilets and/or tanks, equipped with crushing apparatus, are generally used in all those situations when it's necessary to insert a toilet and/or kitchen in definite existing buildings, where this utility was not previously provided and the plumbing was not supplied with pipes having suitable diameter, slope of flush, bends, or anything needs an efficient duct.

Said types of toilets and/or tanks, equipped with crushing apparatus, permit the passage of waste materials and waters through pipes having a quite small diameter, so that this utility can be applied in any area of the building, avoiding a series of devastating alterations necessary to make the discharge line according to the current building concept, which requires definite diameters in pipes and definite slope of flush. In addition, another advantage in the use of these types of toilets and/or tanks is that the water pump, placed in the crushing tank, conveys the crushed waste material in the sewage pipes. Said pump has in fact double function of pump and crushing apparatus, so conveying the wastewater in any direction, even with negative slopes. In this way, it's possible to install a toilet and/or kitchen also in areas of the flat that are lower than the sewage pipe of the sump pits, like in cellars, garages, in practice anywhere.

This characteristic, together with the fact that, thanks to the crushing apparatus, the duct needs pipes with smaller diameter, permits an easy installation, avoiding large invasive actions on the original building structure, making this system largely used in many environments and, consequently, it permits several building improvements, which are particularly desirable in industrial mass production, thanks to the subsequent reduction of the specific production and labour costs.

Nevertheless, said current known apparatus has many drawbacks.

One of the main problems of said system is the maintenance and/or possible repairs on the "heart" of the mechanism, i.e. the water pump with double function of crushing and flushing the wastewater.

In these cases, the user has a considerable inconvenience, because it's necessary to empty the crushing tank holding the water pump.

Actually, until now, due to the same composition of the water to convey, we have chosen very inconvenient solutions, such as the intake of the content of the tank directly from its top opening, or the operation to drain the content by means of the traditional tools and hydraulic supports. Obviously, these operations require the use of pumps supplied with ends of suitable shape, as well as the help of experts, provided with necessary equipments, thus involving time and economic drawbacks. As a matter of fact, any even simple operation of maintenance on the water pump, on the crushing element, or even the simple removal of objects accidentally dropped inside the tank, need its previous drainage.

It's therefore very important to make these operations easier, avoiding the help of experts that involves high costs.

### Disclosure of invention

This invention aims at eliminating the above-mentioned and other drawbacks, supplying a simple and economical device that makes the operation to empty the tank easy, safe, inexpensive and, at the same time, prevents the operator from having direct contact with the sewage, so facilitating the accessibility of the operation as well as improving the sanitary conditions.

A further purpose of the present invention is to provide a nozzle that, applied to the collecting bags, perfectly enters the hole where the lid is placed, so avoiding any break and ensuring the perfect outflow of the water inside.

The advantages resulting from this invention essentially consist of the fact that it's possible to easily empty the tank containing the liquid, without never touching the dirt it contains; that this operation is carried out hygienically also in the traditional crushing systems using a water engine; that it can be applied on existing apparatus easily and economically; that the outflow of the water is safe and accidental leaks of liquids or breaks of the lid are prevented.

Reduced to its essential structure and with reference to the figures of the enclose drawings, a system for the hermetic drainage of a toilet and/or tank with apparatus for crushing and flushing wastewater, according to the present invention, comprises:
- means to keep the crushing tank hermetically sealed, in normal conditions, by means of a device equipped with internal lid (4) that closes the tank;
- means to empty the tank by means of a cylindrical nozzle (10) with a diameter as large as the hole of the lid, applied at the end of a container of suitable shape for the collection of the wastewater, which, once inserted into the lid, pushes it inside the tank, so that the internal liquid passes to the container, permitting its hermetic and automatic refilling, while the tank is emptying.

Device for the hermetic drainage of a toilet and/or tank with crushing and/or flushing apparatus, consisting of a lid (4) fixed on the surface of the tank holding the crushing and/or flushing apparatus, to which it is connected by means of two flanges, one inside (2A) and one outside (2), placed on the neck of the lid. Once the device is inserted by pressure into the hole of the toilets and/or crushing tanks, one of said flanges is close to the inner side while the other one is close to the outer side of the toilets and/or crushing tanks, in this way the device is locked in such a position and cannot accidentally get in or out.

The lid is made of a cylindrical portion (1) that enters the hole made on the side of the toilet and/or tank holding the wastewater and is connected to it by means of two flanges, one inside and one outside (2, 2A) that make the seal hermetic, since this portion (1) is connected also to the nose (4) closing the inner hole (5) for the outflow of the liquid by means of the connecting element (3).

Conveniently, the nose (4) of the lid perfectly enters the hole of the sewage collector (5) from the inside of the tank, so that it cannot be accidentally opened from the outside.

Conveniently, the lid is placed on the crushing tank at a low level, so that its opening allows the liquid to perfectly flow. Said lid has such a shape that it needs on the side of the container a simple hole where it enters by pressure, by means of suitable tolerances on the diameter and a suitable double hermetic flange, offering a sufficient hydraulic and mechanical seal.

As a matter of fact, the accuracy of the mechanical seal is very important, as it must resist to the pressure exerted inside the hole on the inner nose of the lid, which perfectly enters the inner diameter of the same lid, so obstructing the outflow of the liquids. The mobile portion of the lid, i.e. the nose, is however connected to the collector placed on the side of the tank, by means of a bar (3) made of the same material as the entire system, so offering a further economic advantage in the production of this detail.

In practice, this invention consists of a lid "normally closed", during the process it remains sealed to the crushing tank with the nose (4) inserted into the hole of the sewage collector (5) in order to block the outflow of the liquid.

Anytime ordinary maintenance is necessary, due to breaks or accidental drops of objects inside the circuit, it's easy to drain the circuit by means of a simple pressure on the nose of the lid closing the collector, towards the inside.

Conveniently, the drainage of the tank is made possible thanks to an element consisting of a suitable pressure nozzle (10), having the same diameter as the inner diameter of the collector fixed on the side of the crushing tank, which is final and hermetic portion of a suitable container for the collection of the wastewater. In this way, by inserting this element into the device, the nose is removed from the collector and the device is opened, so that the (full) crushing tank comes into contact with the (empty) container that automatically refills with the liquid held in the tank. Thus, it's possible to drain the apparatus completely and immediately, without any unpleasant leakage, and without the aid of specific hydraulic tools, so permitting a practical and easy maintenance of the apparatus.

Conveniently, the cylindrical nozzle (10) to be applied to the bags containing the wastewater or anyway liquids in general, comprises a cylindrical body (13) where the open part of the bag is fixed and a cylindrical conduit open inside and equipped with a projecting rounded element (11) acting on the lid inserted into the toilet and/or tank containing the waters, exerting a push strong enough to open it inside.

With reference to the above device, on the cylindrical body (13) where the bag containing the waters is applied, near the portion where the flushing duct (12) starts, there is a groove (15) where a gasket is fixed in order to make more steady the fastening of the bag to the cylindrical conduit to be inserted into the toilet or the tank containing the wastewater.

The bag is fixed to the cylindrical conduit by pressure, sticking, thermo-welding or any other known technique.

Both the cylinder (13) and the flushing conduit (12) are hollow inside and connected each other or constituted by a single body in order to permit the outflow of the liquid inside.

Conveniently, the flushing conduit (12) has a diameter proportional to the hole on the toilet or the tank containing the waters, in the point where the lid is inserted, so that it can be hermetically inserted into the hole, covering the entire available space and avoiding the risk of liquid leaks when it flows to the bag.

Conveniently, the portion of the nozzle that pushes the lid inside, so opening the device, is formed by a semi-circle (11) connected to the conduit (12) with an external rounded shape (16), so that it's this part that acts on the lid facilitating its opening and avoiding any possible break.

Conveniently, the pushing element (11) is thin and made of a resistant material, set to open the lid, but at the same time not cutting it, in order to avoid any break and facilitate the outflow of the liquid inside the bag.

Conveniently, while the drainage is carried out, simultaneously the wastewater is retrieved, so making it easy to convey to any destination.

Conveniently, the advantages obtained by this device can be provided also with existing apparatus, thanks to its extreme simplicity. In future, this device may be provided with new apparatus without any additional manufacturing cost.

It is small, cheap and can be realized with standard diameters in mass production with any technology concerning the materials used, and however with the same result to get an accessory economically convenient for its great utility.

In practice, the manufacturing details may, however, vary as regards shape, size, position of elements, and type of materials used, but still remain within the range of the idea proposed as a solution and, consequently, within the limits of the protection granted by this patent for invention.

### Brief description of drawings

The advantages of the present invention can be better understood by experts in this field, referring to the enclosed that are given as practical examples of the invention, but are not to be considered restrictive.

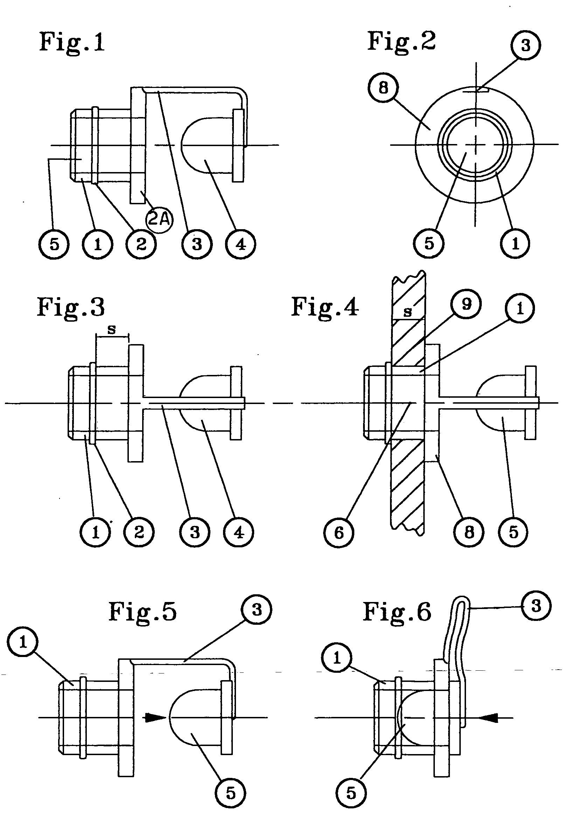

- Fig. 1 shows a side view of the invention, including: the cylindrical portion (1) of the lid that must enter the hole made on the side of the tank and/or toilet holding the wastewater; the external (2) and internal (2A) flanges that make the above seal hermetic; the nose (4) that closes the inner hole for the outflow of the liquid (5). This detail, even if differently numbered from the body of the invention, is however part of it, thanks to the connection (3) conveniently made of the same material.
- Fig. 2 shows the relative front view of the invention, only for reference.
- Fig. 3 shows the lid view of the same device, still in open position, in order to notice that the small shape of the connecting part (3) makes the connection between the closing nose (4) and the body (1) flexible and easy to remove, even if the overall object remains a single body.
- Fig. 4 shows, with the same view, one of the several possibilities through which the body (1) can be connected both mechanically and hydraulically to the hole, thanks indeed to the suitable receptacle (6) placed at suitable distance between the two flanges that are already part of the manufacture (8).
- Figs. 5 and 6 show the side views of the two different positions of the device: Fig. 5-OPEN, Fig. 6-CLOSED.

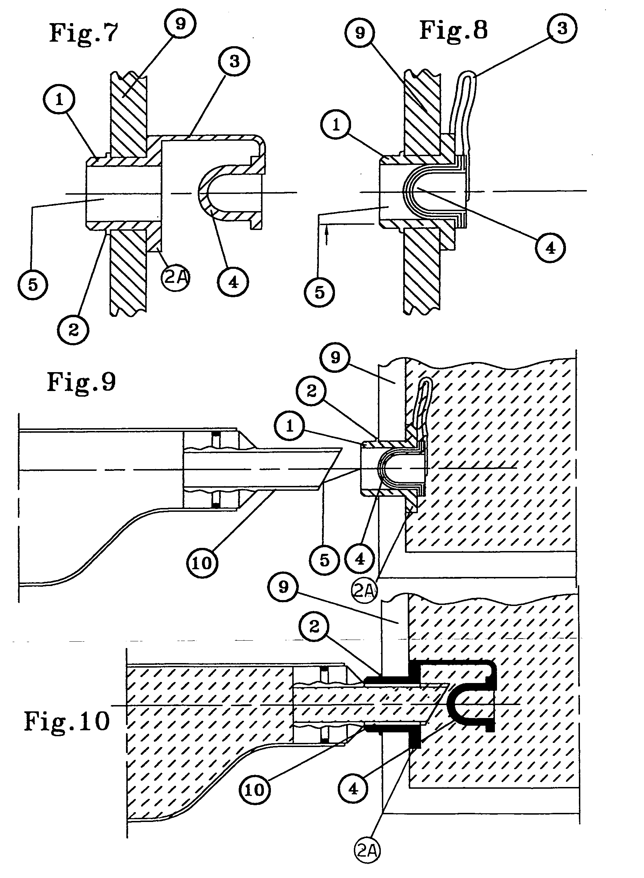

- Figs. 7 and 8 show the cross sections of the two positions of the device inserted into the hole made on the side of the toilet and/or crushing and flushing tank of the wastewater. Fig. 7 highlights that the body (1) has perfectly entered the hole of the toilet and/or crushing tank (9) and this seal is made hermetic by the internal (2A) and external (2) flanges. In this case, the connection of the tank or the toilet with the outside is open, thanks to the position of the nose (4), removed from the hole (5), but held in position by the flexible connection (3). On the contrary, the following Fig. 8 highlights the accurate closed connection of the nose (4) into the hole (5); this seal is made perfect, thanks to the connection between the two parts with tolerances so restricted that they do not need any further gasket.
- Fig. 9 shows the section of the full tank with the lid closed, while the following Fig. 10 shows the insertion of the opening nozzle (10), with a diameter corresponding to the inner hole (5), which pushes the nose (4) inside, so opening the passage to the liquid, and at the same time it ensures a perfect seal in order to completely drain the system without any unpleasant external leak, obviously nasty considering the material involved.

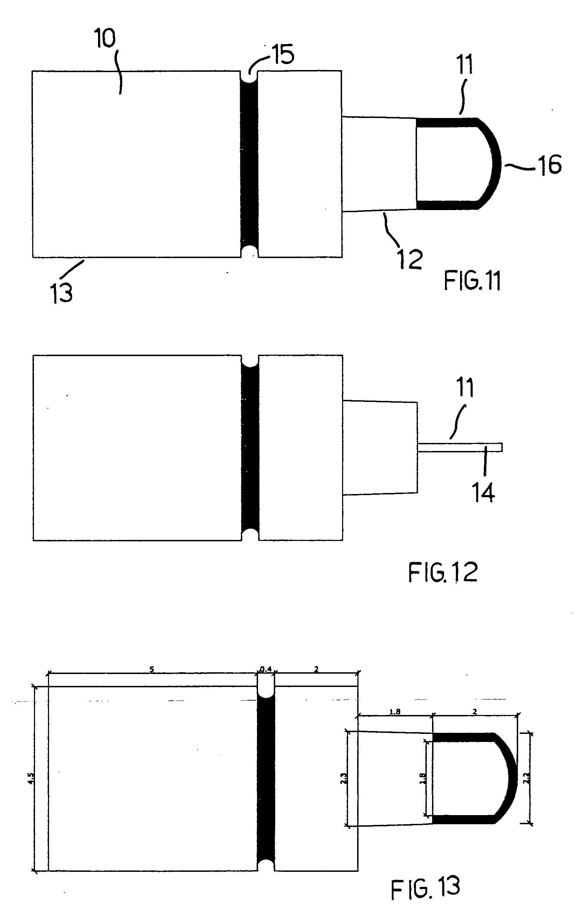

- Fig. 11 shows the front view of the opening nozzle (10), with the conduit (12), which enters the hole of the tank or toilet, and the U-shaped buffer (11) for the insertion into the hole (5) made on the side of the tank and/or toilet containing the wastewater, in order to empty it. Said buffer (11), in the point where it pushes the nose to enter the tank and/or toilet, has a rounded shape (16), so as to permit the opening of the nose without breaking it. In this figure, it's also possible to observe the groove (15) that includes a gasket permitting the hermetic connection between the cylinder and the collecting bag. The same drawing also depicts the body (13) of the nozzle (10) from the part where it is connected with the bag containing the wastewater.
- Fig. 12 shows the side view of the same device and the thickness (14) of the buffer (11).
- Fig. 13 shows the real sizes of the nozzle in a practical example.

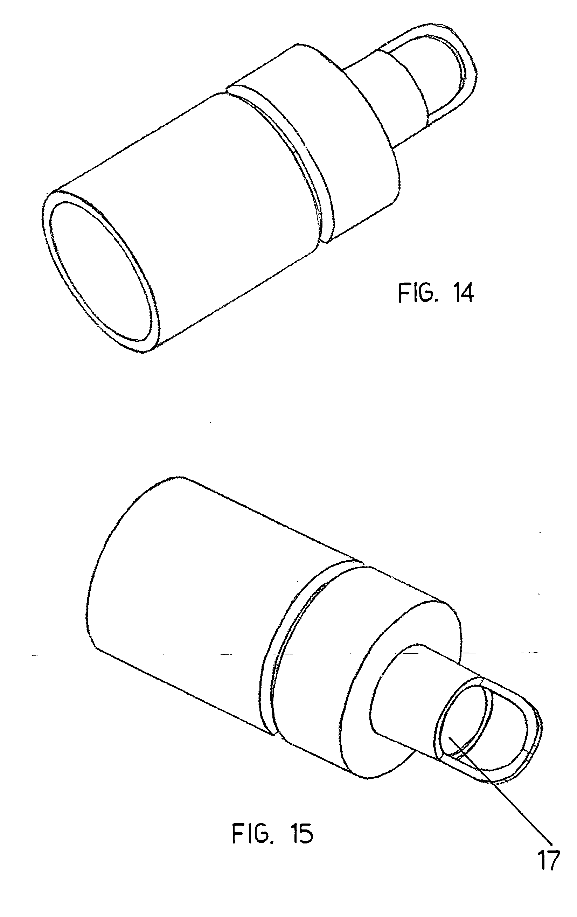

- Figs. 14 and 15 show the perspective views of two different positions of the device, with the hole (17) through which the wastewater passes.

## Claims

1. System for the hermetic drainage of a toilet and/or tank with apparatus for crushing and flushing wastewater, **characterised in that** it comprises:
- means to keep the crushing tank hermetically sealed, in normal conditions, by means of a device equipped with internal lid (4) that closes the tank;
- means to empty the tank by means of a cylindrical nozzle with a diameter as large as the hole of the lid, applied at the end of a container of suitable shape for the collection of the wastewater, which, once inserted into the lid, pushes it inside the tank, so that the internal liquid passes to the container, permitting its hermetic and automatic refilling, while the tank is emptying.

2. Device as claimed in claim 1, **characterized in that** the lid (4) is made of a cylindrical portion (1) that enters the hole made on the side of the toilet and/or tank holding the wastewater and is connected to it by means of two flanges, one inside and one outside, which make the seal hermetic, since this portion (1) is connected also to the nose (4) closing the inner hole (5) for the outflow of the liquid by means of the connecting element (3).

3. Device as claimed in claims 1 and 2, **characterized in that** the nose (4) of the lid perfectly enters the hole of the sewage collector (5) from the inside of the tank, so that it cannot be accidentally opened from the outside.

4. Device as claimed in claims 1 and 2, **characterized in that** (4) the lid is placed on the crushing tank at a low level, so that its opening allows the liquid to perfectly flow.

5. System as claimed in claim 1, **characterized in that** the cylindrical nozzle (10) to be applied to the bags containing the wastewater or anyway liquids in general, comprises a cylindrical body (13) where the open part of the bag is fixed and a cylindrical conduit open inside and equipped with a projecting rounded element (11) acting on the lid inserted into the toilet and/or tank containing the waters, exerting a push strong enough to open it inside.

6. Nozzle as claimed in claim 5, **characterized in that**, on the cylindrical body (13) near the portion where the flushing duct (12) starts, there is a groove (15) where a gasket is fixed in order to make more steady the fastening of the bag to the cylindrical conduit to be inserted into the toilet or the tank containing the wastewater.

7. Nozzle as claimed in claim 5, **characterized in that** the bag is fixed to the cylindrical conduit (13) by pressure, sticking, thermo-welding or any other known technique.

8. Nozzle as claimed in claim 5, **characterized in that** both the cylinder (13) and the flushing conduit (12) are hollow inside and connected each other or constituted by a single body in order to permit the outflow of the liquid inside.

9. Nozzle as claimed in claim 5, **characterized in that** the flushing conduit (12) has a diameter proportional to the hole on the toilet or the tank containing the waters, in the point where the lid is inserted, so that it can be hermetically inserted into the hole.

10. Nozzle as claimed in claim 5, **characterized in that** the portion of the nozzle that pushes the lid inside, so opening the device, is formed by a semi-circle (11) connected to the conduit (12) with an external rounded shape (16), so that it's this part that acts on the lid facilitating its opening and avoiding any possible break.
